# EUROPEAN PATENT SPECIFICATION

(11) **EP 1 337 586 B1**
(45) Date of publication and mention of the grant of the patent: **22.11.2006**
(21) Application number: 01981579.4
(22) Date of filing: 15.10.2001
(51) Int. Cl.: C08L 69/00, C08L 67/02, C08L 55/02

(54) **TRANSLUCENT AND TRANSPARENT POLYCARBONATE THERMOPLASTIC ALLOYS AND METHODS FOR MAKING THEREOF**
DURCHSCHEINENDE UND DURCHSICHTIGE THERMOPLASTISCHE POLYCARBONATLEGIERUNGEN UND VERFAHREN ZU IHRER HERSTELLUNG
ALLIAGES THERMOPLASTIQUES EN POLYCARBONATE TRANSLUCIDE OU TRANSPARENT ET PROCEDES DE FABRICATION ASSOCIES

(30) Priority: 17.10.2000 US 690342; 17.10.2000 US 690341
(43) Date of publication of application: 27.08.2003
(73) Proprietor: GENERAL ELECTRIC COMPANY, Schenectady, NY 12345 (US)
(72) Inventor: VAN HARMERSVELD, Eelco, M., S., NL-4942 BT Raamsdonks (US)
(74) Representative: Szary, Anne Catherine
(86) International application number: PCT/US2001/032108
(87) International publication number: WO 2002/032999

(56) References cited:
- WO-A-00/52096
- FR-A- 2 159 882
- GB-A- 1 586 910
- JP-A- 9 048 922
- GRECO R ET AL: "POLYCARBONATE/ABS BLENDS: A LITERATURE REVIEW" ADVANCES IN POLYMER TECHNOLOGY, JOHN WILEY AND SONS, CHICHESTER, GB, vol. 13, no. 4, 21 December 1994 (1994-12-21), pages 249-258, XP000476817 ISSN: 0730-6679
- JIANRONG FENG ET AL: 'POLYMER BLEND LATEX FILMS: MORPHOLOGY AND TRANSPARENCY' MACROMOLECULES vol. 28, no. 23, 06 November 1995, ACS, WASHINGTON, DC, US, pages 7671 - 7682, XP000536354
- PAPKOV V.S. ET AL: 'Transparent microheterogeneous blends containing a multiblock copolymer and a foreign homopolymer' POLYMER vol. 39, no. 3, 1998, ELSEVIER SCIENCE PUBLISHERS B.V, GB, pages 631 - 640, XP004098594
- YOSHIDA M. ET AL: 'Efficient Synthesis of Fullerene Dimers Containing a Fluoroalkyl Group' TETRAHEDRON LETTERS vol. 40, no. 4, 22 January 1999, ELSEVIER, AMSTERDAM, NL, pages 735 - 736, XP004151631
- DATABASE COMPENDEX [Online] EIX86060020513, 1986 FEIJOO L.: 'A study of the compatibility of poly(methyl methacrylate)/methyl methacrylate-styrene random copolmer blends'
- HONGTING P.U. ET AL: 'Studies on polycarbonate/Polystyrene Polycarbonate-g-Polystyrene blends. III Optical properties of PC/PS/PC-g-PS Blends' POLYMER INTERNATIONAL vol. 44, no. 2, 1997, pages 156 - 160
- DATABASE COMPENDEX [Online] EIX98244169486, 1998 KUMUDINIE C. ET AL: 'Preparation and properties of rubber toughened high temperature poly (arylene ether)'
- MASCIA L.; FEKKAI T.: 'SHRINKAGE PHENOMENA IN BIAXIALLY DRAWN TRANSPARENT POLYETHYLENETEREPHTHALATE BLENDS' POLYMER NETWORKS AND BLENDS vol. 2, no. 4, 1992, TORONTO, CA, pages 197 - 207, XP009046151
- FEIJOO J.L.; MUELLER A.J.; ACOSTA J.R.: 'A STUDY ON THE COMPATIBILITY OF POLY(METHYL METHACRYLATE)/METHYL METHACRYLATE-STYRENE RANDOM COPOLYMER BLENDS' JOURNAL OF MATERIALS SCIENCE LETTERS vol. 5, 1986, LONDON, GB, pages 313 - 314, XP009046170

## Description

### Field of the Invention

The present invention relates to translucent or transparent alloys of polycarbonate where a continuous phase of the alloy comprises polycarbonate.

### Background of the Invention

This application relates generally to translucent or transparent thermoplastic articles. Specifically, this application relates to thermoplastic articles having relatively high percent light transmission and a haze value that renders such articles either translucent or transparent. For purposes of this application, levels of haze which may be high in an absolute sense, but are still between 30 and 5 % (that is 70% to 95% transparent), will be referred to as "relatively low haze." If an observer looks through such a relatively low haze article at an object behind the article, the observer can see that there is a particular object a distance behind the article (relatively low haze), but the observer can not clearly see the object (low clarity).

Various efforts have been made to make translucent or transparent thermoplastic articles having unique visual appearances. For example, thermoplastic articles having very high haze (above about 95%) have been made by incorporating particles of a second polymer into a first polymer matrix where the refractive index of both polymers are sufficiently different that the appearance of haze results. Specifically, Japanese Patent No. 3,143,950 discloses light fixture covers made by dispersing such second polymer particles in a first polymer matrix having a different refractive index. Such materials have been useful for enclosures where the intent is to mask the any apparatus behind the article having relatively low haze. Very high haze, low clarity light fixture enclosures are made from this material because the emitted light is well dispersed across the entire enclosure. Also, the light bulb remains hidden behind the enclosure when it is not lit.

Typically, articles having relatively low haze also have high clarity. For example, polycarbonate compositions comprising ZnO as a light diffuser typically have a clarity above 90 % when haze is near 90%. According to ASTM D 1003, which is hereby incorporated by reference, haze is defined as the percentage of transmitted light that deviates from the incident beam by more than 2.5° on average. Clarity is defined as the percentage of transmitted light that deviates from the incident by more than 0, but less than 2.5° on average. Conventional materials which have relatively low haze (i.e., a smaller degree of > 2.5° scattering) also have high clarity (i.e., a smaller degree of < 2.5° scattering). This relationship holds true even when the absolute level of haze is high, but the "relatively low" haze level is less than about 95%.

For some applications, it is desirable to achieve a translucent material having relatively low haze and relatively low clarity. For example, in applications such as privacy windows, and more recently business equipment housings, it is desirable to have high light transmission, relatively low haze, and relatively low clarity so that objects can be seen behind the material, but not clearly such objects are said to be masked.

There have been previous attempts to make translucent polycarbonate resin compositions by incorporating zinc oxide into polycarbonate. There are several disadvantages to compositions which incorporate zinc oxide or other inorganic light diffusing agents. Specifically, these agents tend to react with polycarbonate and other thermoplastics to cause degradation of the physical characteristics of the thermoplastic. Additionally, compositions comprising zinc oxide tend to have very high clarity at relatively low levels of haze which are still high in an absolute sense (e.g., 40% to about 98%).

While there are many second polymers that may be incorporated into polycarbonate, one such second polymer is acrylonitrile-butadiene-styrene plastic. Acrylonitrile-butadiene-styrene (ABS) plastics, which are rubber and thermoplastic composites, comprise a broad, versatile family of graft copolymers with an excellent balance of mechanical properties, processing latitude, recyclability and economics. Most ABS products consist of a two phase system of a grafted terpolymer, acrylonitrile(butadiene(styrene, dispersed in a glassy continuous matrix of styrene(acrylonitrile (SAN) copolymer. The graft terpolymer typically consists of a polybutadiene rubber core and grafted SAN shell, small amounts of styrene and acrylonitrile being grafted onto the rubber particles to compatibilize the two phases. The broad versatility of ABS results from the many compositional and structural variables that can be selected to achieve a desired property balance.

In the ABS manufacturing process, three distinct polymerization reactions or stages are involved. First the elastomeric (rubber) component, either butadiene homopolymer, a styrene-butadiene or an acrylonitrile-butadiene copolymer, is produced. This phase can be carried out either in a water-based emulsion or in a solution polymerization process. In the second stage, the styrene and acrylonitrile (50-90/10-50) are copolymerized optionally with other monomers and grafted onto the elastomeric phase to achieve the desired compatibility. The rubber content of an ABS graft may range from 10 to 90 weight percent. This stage can be performed either in emulsion, bulk/mass or via suspension and/or the emulsion-suspension process route. In the third stage, styrene and acrylonitrile and, optionally, other olefin monomers are copolymerized either simultaneously with the second (grafting) stage or separately in an independent operation to form the rigid matrix. Again, this step may involve one or more of the following processes: emulsion, bulk or suspension polymerization. The SAN matrix may range from 10 to 90 weight percent of the ABS graft composition.

In addition, the ABS materials may be produced by various process techniques known as batch, semi-batch or continuous polymerization for reasons of either manufacturing economics, product performance or both.

To alter specific properties of the resulting polymers, other monovinylidene aromatic, ethylenically unsaturated nitrile and acrylate monomers may be incorporated, either in addition to or in place of the various acrylonitrile-butadiene-styrene components. The physical properties of ABS plastics vary somewhat with their method of manufacture but more so with their composition. Specific performance requirements and extensive material differentiation are achieved by manipulation of monomer composition, microstructure, morphology or additives.

Transparent ABS grades have been made in various manners. Transparent ABS may be made by grafting styrene, acrylonitrile and optionally high levels of methyl methacrylate onto a particular styrene-butadiene rubber (SBR) substrate. Here the refractive indices of the dispersed rubber phase and the rigid continuum must be closely matched. Another method is to use a polybutadiene rubber with particles sufficiently small that they do not reflect visible light. When making rubber particles sufficiently small that they do not reflect visible light it is usually not necessary to match the refractive indices of the component as long as the continuous phase or matrix possesses the desired optical properties.

U.S. Patent No. 5,017,422 (1991) to Schuman et al. discloses transparent cast films of ABS plastics having a film thickness from 1 to 200 (m. A graft polymer of a diene rubber, preferably polybutadiene and graft monomers, preferably of styrene and acrylonitrile, were utilized to produce self supporting thin films by dissolving a solution of the ABS plastic with mold release agent in an inert organic solvent and casting onto a support. This approach of using casting techniques points out the continuing need for transparent ABS polymers suitable for extrusion in thin films or layers.

While these approaches achieve transparency, there remains a number of unsolved and unmet needs in the field of transparent thermoplastic alloys with regard to particular properties and potentially advantageous properties. There is a need for more economical, lower cost transparent PC and ABS resins, a need for transparent PC/ ABS resins extrudable into thin films, particularly thin films suitable for laminates, a need for transparent PC/ABS films with good adhesion to other transparent polymers and a need for molding grade clear PC/ ABS compositions with rubbery characteristics, ductility and high elongations to failure.

### Summary of the Invention

In one embodiment the present invention provides a transparent or translucent thermoplastic alloy comprising a continuous phase and a discontinuous phase wherein the discontinuous phase is immiscible with the continuous phase, and wherein the continuous phase comprises polycarbonate and poly(1,4+cyclohexane dimethanol-1,4-cyclohexane dicarboxylate) (PCCD). ABS is one exemplar of the dispersed phase.

In another embodiment the present invention provides a method for producing a transparent or translucent thermoplastic alloy comprising a continuous phase comprising a first thermoplastic composition comprising a polycarbonate and poly(1,4-cyclohexane dimethanol-1,4-cyclohexane dicarboxylate) and a discontinuous phase comprising a second thermoplastic composition, wherein the discontinuous phase is immiscible with the continuous phase, said method comprising:
a) selecting the first thermoplastic composition and the second thermoplastic composition wherein the refractive indices of the first thermoplastic composition and the second thermoplastic composition are approximately equal to each other; and
b) combining the first thermoplastic composition and the second thermoplastic composition
to produce thereby a transparent or translucent thermoplastic alloy comprising a continuous phase and a discontinuous phase.

In a further embodiment the present invention provides a method for producing a transparent or translucent thermoplastic alloy comprising a continuous phase comprising a first thermoplastic composition and a discontinuous phase comprising a second thermoplastic composition, wherein the discontinuous phase is immiscible with the continuous phase, said method comprising:
a) a step selected from the group of steps consisting of:
   i) adjusting the refractive index of the first thermoplastic composition;
   ii) adjusting the refractive index of the second thermoplastic composition; and
   iii) separately adjusting the refractive index of both the first and second thermoplastic compositions whereby the refractive indices of the resulting first thermoplastic composition and the resulting second thermoplastic composition are approximately equal to each other; and
b) combining the first thermoplastic composition and the second thermoplastic composition
to produce thereby a transparent or translulcent thermoplastic alloy comprising a continuous phase and a discontinuous phase,
wherein the first thermoplastic resin comprises a polycarbonate and the refractive index is adjusted by the addition of poly(1,4-cyclohexane dimethanol-1,4-cyclohexane dicarboxylate); and
wherein the second thermoplastic resin comprises acrylonitrile-buladiene-styrene rubber and the refractive index is adjusted by adjusting the styrene content or by the addition of methyl methyl methacrylate as a co-monomer.

### Detailed Description of the Invention.

A typical thermoplastic article according to the invention comprises a blend of transparent thermoplastic resin, transparent mix of thermoplastic resins or transparent mix of thermoplastic resin and oligomeric or polymeric additive (hereinafter called "the matrix") as described above and transparent dispersed thermoplastic particles (hereinafter called "dispersed phase"). Such articles have a percent light transmission above 60%, a haze of less than 30%, and a clarity of greater than 70% but less than 100%, unless such articles are transparent. To obtain these optical characteristics the matrix and the dispersed phase must be selected carefully. Specifically they must have refractive indices that differ by less than 0.01.

In a preferred embodiment of the invention wherein the matrix comprises polycarbonate and poly(1,4-cyclohexanedimethanol-1,4-cyclohexanedicarboxylate and the dispersed phase is ABS particles, the percent light transmission is above 75%, the haze is less than 95%, and the clarity is less than 85%. In this embodiment, the loading of ABS particles is from about 5 to about 50 parts per hundred parts by weight of polycarbonate containing matrix, preferably from about 10 to about 40 parts per hundred parts by weight of polycarbonate containing more preferably from about 15 to about 30 parts per hundred parts by weight of polycarbonate containing matrix, and most preferably from about 20 to about 25 parts per hundred parts by weight of polycarbonate containing matrix. Preferred matrix materials also include transparent mixtures of all of the above and of oligomeric additives (e.g., resorcinol bis(diphenylphosphate).

Preferred transparent thermoplastic matrix materials comprise polycarbonate homopolymers or copolymers. The most-preferred matrix material comprises an aromatic polycarbonate homopolymer based primarily on the bisphenol-A monomer. The synthesis of such materials is well known in the art. For example, U.S. Patent No. 5,364,926 describes the melt process for making polycarbonate, and is incorporated by reference herein. The interfacial and solid state process can also be used.

If it is desired to control the refractive index of the matrix or continuous phase, one means of accomplishing this goal is to utilize a mixture of polycarbonate and a miscible polymeric additive and /or a miscible oligomeric additive, wherein said additive has a refractive index that differs from the refractive index of polycarbonate by at least 0.01.

To the present invention the miscible polymeric additive is poly(1,4-cyclohexanedimethanol-1,4-cyclohexanedicarboxylate) (PCCD) and preferably the polycarbonate has a refractive index of about 1.58 and the PCCD polymer has a refractive index of 1.51.

The refractive index of the blend of the two components can be controlled by varying their relative amounts and as long as the two phases are miscible in the proportions being used, the continuous phase will be transparent. Then the transparency or translucency of the resulting composite as well as i he haze measurement will depend on whether the "dispensed phase" has a refractive index that matches or approximates that of the continuous phase. The term matching of refractive indexes is functionally defined herein that when two or more immiscible phases constitute mixture, their respective refractive indices are said to be matched, if the resulting mixture is The present invention relates to transparent or translucent blends of immiscible thermoplastic materials, consequently depending on the optical properties sought for the alloy, the mathematical match in the refractive indices of the constituent materials may be less than exact.

When it is desired to produce a material that is translucent, the particles of polymer comprising the dispersed phase (i.e. the discontinuous phase) will have a refractive index different from that of the matrix or continuous phase. The dispersed phase may constitute articles of any transparent thermoplastic polymer or other light diffuser which has a refractive index (hereinafter "R.I.") different from that of the matrix. Preferably, the R.I. of the light diffuser differs from that of the matrix by at least 0.001. Suitable light diffusers included polytetrafluoroethylene, zinc oxide, and ABS. In a more preferred embodiment of the invention, the matrix thermoplastic resin is polycarbonate having a R.I. of 1.55 to 1.59, and the dispersed phase is ABS having a R.I. of 1.46 to 1.53. However, when transparency is desired, it will be necessary to prepare a disperses phase, usually ABS, that has a refractive index close to that of the thermoplastic matrix or to prepare a matrix phase that has a refractive index close to that of the dispersed phase. This means that the R.I. of the ABS must be increased while that of the polycarbonate must lowered.

Others have found that by combining a styrene-butadiene rubber/sty rene-acrylonitrile (SBR/SAN) high rubber graft phase with a rigid matrix phase derived from methyl methacrylate, styrene and acrylonitrile wherein the calculated refractive index of the graft phase approximately matches the refractive index of the matrix phase, low haze extrudable ABS transparent polymers having the ductility and performance advantages of ABS polymers may be prepared. Such SBR rubber based ABS polymers have been found to be particularly useful for extrusion into thin films for use in transparent polymer laminates as they exhibit good adhesion to other polymers as well as a low haze transparency and ductility.

The ABS polymers utilized by this invention comprises a two-phase system. The first phase comprises a high rubber styrene-butadiene (SBR) substrate with a copolymer of styrene-acrylonitrile (SAN) attached to it. This substrate is commonly referred to as the "graft phase" because the SAN is physically attached or grafted to the rubber through a chemical reaction. A second phase may comprise methyl methacrylate in the form of polymethylmethacrylate (PMMA) and SAN and is commonly referred to as the "free rigid phase." The SBR/SAN graft phase is dispersed throughout the rigid phase PMMA/SAN that forms the polymer continuum. The rubber interface is the surface forming the boundaries between the graft and rigid phases. The grafted SAN acts as a compatibilizer between the rubber and rigid phase at this interface and prevents the separation of these two otherwise immiscible phases.

Another embodiment involves increasing the refractive index of the SAN phase. This is accomplished by decreasing the amount of acrylonitrile nitrile in the styrene acrylonitrile polymer. In other words increasing the styrene content of the styrene acrylonitrile copolymer increases the refractive index of the copolymer. In contrast use of methyl methylmethacrylate as a co-monomer generally decreases the refractive index. Thus depending on whether the refractive index of a copolymer is to be increased or decreased will govern the choice of the co-monomer.

The ABS type thermoplastic resins utilized by the present invention are graft copolymers of vinyl cyanide monomers, di-olefins, vinyl aromatic monomers and vinyl carboxylic acid ester monomers. Thus applicants define herein the phrase ABS type or acrylonitrile-butadiene-styrene type to include

The ABS type thermoplastic resins utilized by the present invention are graft copolymers of vinyl cyanide monomers, di-olefins, vinyl aromatic monomers and vinyl carboxylic acid ester monomers. Thus applicants define herein the phrase ABS type or acrylonitrile-butadiene-styrene type to include the group of polymers derived from vinyl cyanide monomers, di-olefins, vinyl aromatic monomers and vinyl carboxylic acid ester monomers as hereinafter defined. Vinyl cyanide monomers are herein defined by the following structural formula: 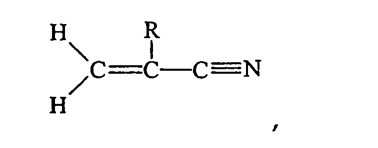 where R is selected from the group consisting of hydrogen, alkyl groups of from 1 to 5 carbon atoms, bromine and chlorine. Examples of vinyl cyanide monomers include acrylonitrile, methacrylonitrile, ethacrylonitrile, (-chloroacrylonitrile and (-bromoacrylonitrile. The di-olefins utilized in the present invention are herein defined by the following structural formula: 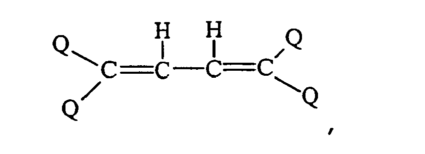 where each Q is independently selected from the group consisting of hydrogen, alkyl groups of from 1 to 5 carbon atoms, bromine and chlorine. Examples of di-olefins include butadiene, isoprene, 1,3-heptadiene, methyl-1,3-pentadiene, 2,3-dimethylbutadiene, 2-ethyl-1,3-pentadiene, 1,3-hexadiene, 2,4-hexadiene, chlorobutadiene, bromobutadiene, dichlorobutadiene, dibromobutadiene and mixtures thereof. Vinyl aromatic monomers are herein defined by the following structural formula: 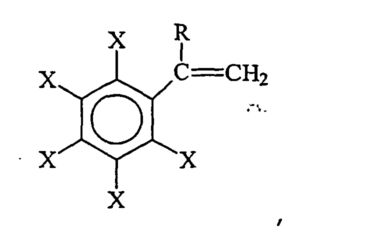 where each X is independently selected from the group consisting of hydrogen, alkyl groups of from 1 to 5 carbon atoms, cycloalkyl, aryl, alkaryl, aralkyl, alkoxy, aryloxy and halogen and where R is independently selected from the group consisting of hydrogen, alkyl groups of from 1 to 5 carbon atoms, bromine and chlorine. The phrase independently selected means that co-polymers, terpolymers, or other interpolymers of these vinyl cyanide monomers may have an independently selected R for the vinyl cyanide relative to the R selected for the vinyl aromatic monomer. Examples of substituted vinyl aromatic monomers include styrene, 4-methylstyrene, vinyl xylene, 3,5-diethylstyrene, p-tert-butyl-styrene, 4-n-propyl styrene, (-methylstyrene, (-ethyl-styrene, (-methyl-p-methylstyrene, p-hydroxy-styrene, methoxy-styrenes, chloro-styrene, 2-methyl-4-chloro-styrene, bromo-styrene, (-chloro-styrene, (-bromo-styrene, dichloro-styrene, 2,6-dichloro-4-methylstyrene, dibromo-styrene, tetrachloro-styrene and mixtures thereof. Vinyl carboxylic acid ester monomers (esters of alpha-, beta- unsaturated carboxylic acids) are herein defined by the following structural formula: 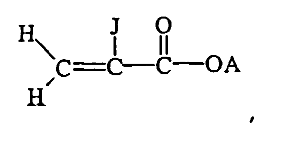 where J is selected from the group consisting of hydrogen and alkyl groups of from 1 to 8 carbon atoms and A is selected from the group consisting of alkyl groups of from 1 to 5 carbon atoms. Examples of vinyl carboxylic acid ester monomers include methyl methacrylate, methyl acrylate, ethyl methacrylate, ethyl acrylate, butyl methacrylate, butyl acrylate, propyl methacrylate, propyl acrylate, 2-ethylhexyl acrylate, 2-ethylhexyl methacrylate, methyl ethacrylate and mixtures thereof.

It will be understood that by the use of "monomers" are included all of the polymerizable species of monomers and copolymers typically utilized in polymerization reactions, including by way of example monomers, homopolymers of primarily a single monomer, copolymers of two or more monomers, terpolymers of three monomers and physical mixtures thereof. For example, a mixture of polymethylmethacrylate (PMMA) homopolymer and styrene-acrylonitrile (SAN) copolymer may be utilized to form the "free rigid phase", or alternatively a methylmethacrylate-styrene-acrylonitrile (MMASAN) terpolymer may be utilized.

Various monomers may be further utilized in addition to or in place of those listed above to further modify various properties of the compositions disclosed herein. In general, the components of the present invention may be compounded with a copolymerizable monomer or monomers within a range not damaging the objectives and advantages of this invention. For example, in addition to or in place of SBR, the rubber phase may be comprised of polybutadiene, butadiene-acrylonitrile copolymers, polyisoprene, EPM and EPR rubbers (ethylene/propylene rubbers), EPDM rubbers (ethylene/propylene/non-conjugated diene rubbers) and crosslinked alkylacrylate rubbers based on C₁-C₈ alkylacrylates, in particular ethyl, butyl and ethylhexylacrylates, either alone or as a mixture of two or more kinds.
Furthermore, the rubber may comprise either a block or random copolymer. In addition to or in place of styrene and acrylonitrile monomer used in the graft or free rigid phase, monomers including vinyl carboxylic acids such as acrylic acid, methacrylic acid and itaconic acid, acrylamides such as acrylamide, methacrylamide and n-butyl acrylamide, alpha-, beta-unsaturated dicarboxylic anhydrides such as maleic anhydride and itaconic anhydride, imides of alpha-, beta-unsaturated dicarboxylic acids such as maleimide, N-methylmaleimide, N-ethylmaleimide, N-Aryl maleimide and the halo substituted N-alkyl N-aryl maleimides, imidized polymethyl methacrylates (polyglutarimides), unsaturated ketones such as vinyl methyl ketone and methyl isopropenyl ketone, alpha-olefins such as ethylene and propylene, vinyl esters such as vinyl acetate and vinyl stearate, vinyl and vinylidene halides such as the vinyl and vinylidene chlorides and bromides, vinyl-substituted condensed aromatic ring structures such as vinyl naphthalene and vinyl anthracene and pyridine monomers may be used, either alone or as a mixture of two or more kinds.

The acrylonitrile-butadiene-styrene type (ABS) thermoplastic resin is preferably based on a SBR high rubber graft with a SAN free rigid phase. Rubber amounts between about 20 percent and about 45 percent are preferred. This ABS composition preferably comprises: a) a free rigid phase derived from a vinyl aromatic monomer and a vinyl carboxylic acid ester monomer, wherein the free rigid phase is present at a weight percent level of from about 30 to about 70 percent by weight based on the total weight of the composition, more preferably from about 35 to about 50 percent by weight thereof, and most preferably from about 38 to about 47 percent by weight thereof; b) a graft copolymer (graft phase) comprising a substrate copolymer and a superstrate copolymer wherein the substrate copolymer comprises a copolymer derived from a vinyl aromatic monomer and a di-olefin and wherein the superstrate copolymer comprises a copolymer derived from an aromatic monomer wherein the graft copolymer is present at a level of from about 30 to about 70 weight percent of the total weight of the composition, more preferably from about 50 to about 65 percent by weight thereof, and most preferably from about 53 to about 62 percent by weight thereof; and c) wherein the refractive index of the free rigid phase and the calculated refractive index of the graft phase are approximately the same (that is, matched to within about .005 or less). The refractive index of the phases may be readily calculated based on the weight percentage of the components and their refractive indices, for example:

The refractive indices of butadiene, styrene, acrylonitrile and methyl methacrylate homo-polymers are 1.515,1.591,1.515 and 1.491 respectively. A butadiene/styrene ratio of 85:15 gives a calculated refractive index of (.85 x 1.515) + (.15 x 1.591) = ~1.526.

The grafted SAN having a styrene to acrylonitrile ratio of 80:20 gives a calculated refractive index of (.80 x 1.591) + (.20 x 1.515) = ~1.576.
A graft copolymer of 65% styrene-butadiene rubber (butadiene: styrene = 85:15) and 35% grafted SAN (styrene: acrylonitrile = 80:20) gives a calculated refractive index of (.65 x 1.526) + (.35 x 1.576) = ~1.544.
In the example above, the free rigid phase must have approximately the same refractive index as the graft rubber phase within ± 0.005. A free rigid phase of 60% PMMA and 40 percent SAN of 75% styrene and 25% acrylonitrile has a refractive index of approximately 1.539, thereby matching the graft phase refractive index to within 0.005.

The free rigid phase is preferably derived from styrene-acrylonitrile (SAN). The ratio of styrene to acrylonitrile is preferably from 1.5 to 15 (that is, preferably from about 60 percent to about 94 percent styrene) and from about 6 percent to about 40 percent acrylonitrile by weight based on the total weight of the free rigid phase, more preferably from about 4 to 12 (from about 80 percent to about 92 percent styrene) and from about 8 percent to about 20 percent acrylonitrile by weight based on the total weight of the free rigid phase and most preferably from about 6 to 9 (from about 85 percent to about 90 percent styrene) and from about 10 percent to about 15 percent acrylonitrile by weight based on the total weight of the free rigid phase.

The graft copolymer is preferably derived from a vinyl aromatic-di-olefin rubber substrate copolymer. The graft copolymer preferably comprises from about 40 percent to about 90 percent of a substrate copolymer and from about 10 percent to about 60 percent of a superstrate copolymer based on the total weight of the graft copolymer, more preferably from about 55 percent to about 75 percent of a substrate copolymer and from about 25 percent to 45 percent of a superstrate copolymer by weight thereof, and most preferably about 65 percent by weight of a substrate copolymer and 35 percent by weight of a superstrate copolymer. The substrate copolymer preferably comprises a vinyl aromatic component level of from slightly greater than about 0 percent to about 30 percent by weight based on the total weight of the substrate copolymer, more preferably from 10 to 20 percent by weight thereof and most preferably 15 percent by weight thereof, and a di-olefin component level of from about 70 percent to about 100 percent of a di-olefin by weight based on the total weight of the substrate copolymer, more preferably from about 80 to about 90 percent by weight thereof, and most preferably about 85 percent by weight thereof. The superstrate may optionally contain a vinyl carboxylic acid ester component such as methyl methacrylate. The graft phase preferably has a weight average particle size of less than 2400 angstroms (0.24 microns), more preferably less than 1600 angstroms (0.16 microns) and most preferably less than 1200 angstroms (0.12 microns). Generally, the particle size of the rubber has an effect upon the optimum grafting level for the graft copolymer. As a given weight percentage of smaller size rubber particles will provide greater surface area for grafting than the equivalent weight of a larger rubber particle size, the density of grafting may be varied accordingly. In general, smaller rubber particles preferably utilize a higher superstrate/substrate ratio than larger size particles to give generally comparable results.

The graft phase may be coagulated, blended and colloided with the free rigid phase homopolymers, copolymers and/or terpolymers by the various blending processes that are well known in the art to form the ASA polymer polyblend.

A lubricant, metal release agent or mold release agent may optionally be utilized. Preferred lubricants and release agents are ethylene bis stearamide, ethylenediamine bis stearamide, butyl stearate, barium stearate, calcium stearate, calcium behenate, calcium laurate, zinc stearate, zinc laurate, aluminum stearate, magnesium stearate, glycerin, mineral oils, liquid paraffins, waxes, higher fatty amides, lower alcohol esters of higher fatty acids, polyvalent alcohol esters of fatty acids and silicone based mold release agents.

There may optionally be added to the resin phases, during or after formation, such additives as heat and ultraviolet light stabilizers, antioxidants, lubricants, flow aids, mold or metal release agents, antistatic agents, flame and fire retardants, plasticizers, fillers, pigments, dyes, special effect pigments, drip suppressants, mineral additives and fillers, reinforcing agents, and the like.

The thermoplastic PC/ABS compositions of the present invention provide ductile transparent compositions of a rubbery nature, useful for extrusion into thin films with rubbery characteristics and good adhesion to polycarbonates and acrylic, providing a lower cost approach to preparation of items such as bulletproof polymer laminates. The thermoplastic compositions are further useful in providing unique molding grade clear compositions with high elongations to failure due to the rubbery nature.

When the refractive indices of the continuous phase or matrix comprising polycarbonate matches the refractive index of the dispersed phase comprising ABS the alloy is usually transparent. When there is less of a match in the refractive indices of the two phases the alloy is translucent. For a given level of mis-match in refractive indices for the two phases the haze level may be increased by increasing the loading or weight percent fraction of the dispersed phase in the continuous phase. As the mis-match in refractive indices becomes greater the loading of the disperse phase necessary to achieve a given level of translucency or haze is reduced. Functionally a translucent composition utilizing the compositions and processes of the present invention is one that is less than transparent but not opaque. Thus both the transparent and translucent alloys of the present invention may be described as non-opaque, whether filled or unfilled.

For transparent and translucent alloys of a continuous phase comprising polycarbonate and a discontinuous phase comprising ABS the weight percent of the polycarbonate phase ranges from about 95 to about 50, preferably from about 90 to about 55, more preferably from about 85 to about 65, and most preferably from about 80 to about 70 weight percent of the sum of the weight percents of the continuous and discontinuous phases.

For translucent compositions the haze as measured by ASTM - 9125 ranges from about 100 to about 0, preferably from about 90 to about 3, more preferably from about 70 to about 5, and most preferably from about 50 to about 10.

The thermoplastic matrix may optionally further contain an optical brightening agent, additional pigments and/or a fluorescent dye. Adding an optical brightening agent helps produce a brighter color for the article. Suitable optical brightening agents include aromatic stilbene derivatives, aromatic benzoxazole derivatives, or aromatic stilbene benzoxazole derivatives. Among these optical brightening agents, Uvitex OB from Ciba Specialty Chemicals (2,5-bis(5'-tert-butyl-2-benzoxazolyl)thiophene) is preferred.

Adding a fluorescent dyestuff generates striking visual effects for the article. Suitable fluorescent dyestuffs include Permanent Pink R (Color Index Pigment Red 181, from Clariant Corporation), Hostasol Red 5B (Color Index #73300, CAS # 522-75-8, from Clariant Corporation) and Macrolex Fluorescent Yellow 10GN (Color Index Solvent Yellow 160:1, from Bayer Corporation). Among these, Permanent Pink R is preferred.

Any type of pigment that is well known for inclusion in thermoplastic materials can also be added to the thermoplastic matrix. Preferred pigments include titanium dioxide, zinc sulfide, carbon black, cobalt chromate, cobalt titanate, cadmium sulfides, iron oxide, sodium aluminum sulfosilicate, sodium sulfosilicate, chrome antimony titanium rutile, nickel antimony titanium rutile, zinc oxide, and polytetrafluoroethylene.

It may also be advantageous to include various chemicals to prevent degradation of the thermoplastic matrix due to exposure to UV light (hereinafter "UV stabilizers"). Suitable UV stabilizers include substituted benzotriazoles, or triazines, or tetraalkylpiperidines. The UV stabilizers may be mixed into the thermoplastic matrix, or they can be included only in a "hardcoat" transparent protective layer that is applied over the viewing surface.

The resin composition according to the invention may further contain other resins and additives such as reinforcing agents, fillers, impact modifiers, heat resisting agents, antioxidants, anti-weathering agents, stabilizers, mold release agents, lubricants, nucleating agents, plasticizers, flame retardants, flow-improving agents and anti-statics. These additives may be introduced in a mixing or molding process, provided the properties of the composition are not damaged.

The reinforcing fillers may be metallic fillers such as fine powder aluminum, iron, nickel, or metal oxides. Non-metallic fillers include carbon filaments, silicates such as mica, aluminum silicate or clay, talc and asbestos, titanium oxide, wollastonite, novaculite, potassium titanate, titanate whiskers, glass fillers and polymer fibers or combinations thereof. Glass fillers useful for reinforcement when used as reinforcing agents are not particularly limited in their types or shapes and may be, for instance, glass fibers, milled glass, glass flakes and hollow or solid glass beads. Glass fillers may be subjected to surface treatment with coupling agents such as silane or titanate-type agents to enhance their adhesion with resin, or coated with inorganic oxides to provide some surface color to the filler. Other types of glass filler may be used to impart decorative effects or special optical effects to the finished articles and may or may not also simultaneously function as reinforcing fillers.

Reinforcing fillers are preferably used in an amount sufficient to yield the reinforcing effect, usually 1 to 60% by weight, preferably less than 10% by weight, based on the total weight of the composition. Glass fibers or a combination of glass fibers with talc, mica or aluminum silicate are preferred reinforcing agents. These fibers are preferably about 0.00012 to 0.00075 inches long. Unless the filler has optical properties that are complementary to that of thermoplastic composition being filled, e.g. such as a close match in RI, the amount of filler added must be less than that which would make the material opaque.

In an exemplary embodiment of the invention, a polycarbonate derived from brominated bisphenol is added as a flame retardant. When such brominated polymers are added, inorganic or organic antimony compounds may further be blended in the composition to synergistically enhance flame retardance introduced by such polycarbonate. Suitable inorganic antimony compounds are antimony oxide, antimony phosphate, KSb (OH)₆, NH₄SbF₆ and Sb₂S₃. A wide variety of organic antimony compounds may also be used, such as antimonic esters of organic acids, cyclic alkyl antimonite esters and aryl antimonic acid compounds. Examples of typical organic antimony compounds are potassium antimony tartrate, antimony salt of caproic acid, Sb (OCH₂CH₃)₃, Sb (OCH (CH₃) CH2CH3)₃, antimony polymethylene glycorate and triphenyl antimony. A preferred antimony compound is antimony oxide.

Phosphites (e.g., aromatic phosphite thermal stabilizers), metal salts of phosphoric and phosphorous acid, hindered phenol antioxidants, and aromatic lactone radical scavengers may also be added as stabilizers or antioxidants.

Suitable antistatic agents include, but are not limited to, phosphonium salts, polyalkylene glycols, sulfonium salts and alkyl and aryl ammonium salts.

Suitable mold release agents include, but are not limited to, pentaerythritol tetracarboxylate, glycerol monocarboxylates, glycerol tricarboxylates, polyolefins, alkyl waxes and amides.

To prepare the resin composition of the invention, the components may be mixed by any known methods. Typically, there are two distinct mixing steps: a premixing step and a melt mixing step. In the premixing step, the dry ingredients are mixed together. This premixing step is typically performed using a tumbler mixer or a ribbon blender. However, if desired,

The composition according to present invention may then be formed into articles by any known method such as extrusion or injection molding. For example, the composition may be may be used to prepare film sheet or complex shapes via any conventional technique.

The thermoplastic articles according to the present invention are useful for a variety of different purposes. As some specific, non-limiting examples, they may be used for business equipment housings such as computer, monitor or printer housings, communications equipment housings such as cellular phone enclosures, data storage device housings, appliances, or automobile parts such as instrument panel components or in a lens for a head lamp. The article can be any size or shape. Thermoplastic articles according to the invention are particularly preferred for applications where low clarity and high percent light transmission are design objectives.

The present invention is further illustrated by way of the following examples. These examples are intended to be representative of the invention and are nol in any way intended to limit its scope.

### Examples

### Example 1 (Comparative)

The following mixtures of PC and SAN with different AN contents were prepa red: PC/SAN1 (AN 25 %), PC/SAN2 (AN 20%) and PC SAN3 (AN15 %).

The mixtures were prepared using the following formulation: 75 parts of PC (1x105), 0.25 parts PETS (obtained from Henkel), 0.1 parts antioxidant 1076 (obtained from CIBA) and 0.1 part tris (di-tert butylphenyl-phosphite (obtained from Ciba Geigy and 25 parts of the various SAN's. The samples were compounded on a twin screw extruder and injection-molded at standard conditions. The results of the analysis of the molded samples are presented in Table 1.

**Table 1: Properties of PC/SAN Blends**

| | PC/SAN1 | PC/SAN2 | PC/SAN3 |
|---|---|---|---|
| Transmission (%, 3.2mm) | 50.2 | 60.1 | 69.7 |
| Haze (ASTM-9125) | 97.5 | 81.3 | 70.5 |
| FPI (0°C, N, ISO 6603/2) | 2835 | 9507 | 2117 |
| INI (23°C, Kj/m², ISO 180) | 5.9 | 5.8 | 4.9 |
| Tensile Modudus (Mpa, ISO527) | 2722 | 2785 | 2780 |
| Vicat B (ISO 306/B) | 129.6 | 134.4 | 124.1 |

When the RI of the SAN phase is increased the difference between the R.I. of the PC and the SAN phases decreases. This results in an increase of the transparency of the blend and a decrease of the haze.

### Example 2 (Comparative)

The following mixtures of PC/SAN3/impact modifier (IM)were prepared: PC/SAN3/IM1, PC/SAN3/IM2, PC/SAN/IM3. IM1 and IM2 are currently used as impact modifiers in PC/SAN/IM blends (HRG SG24, obtained from UBE Cycon and blendex336 obtained from specialty chemicals). The mixtures were prepared using the following formulation: 65 parts of PC(1x105), 20 parts of SAN3 (obtained from GE plastics Bauvais), 0.25 parts PETS (obtained from Henkel), 0.1 parts antioxidant 1076 (obtained from CIBA) and 0.1 part tris (di-tert butylphenyl-phosphite (obtained from Ciba Geigy and 25 parts of the various SAN's. The samples were compounded on a twin screw extruder and injection-molded at standard conditions. The results of the analysis of the molded samples are presented in Table 2.

**Table 2: Properties of PC/SAN/IM blends**

| | PC/SAN3/IM1 | PC/SAN3/IM2 | PC/SAN3/IM3 |
|---|---|---|---|
| Transmission (%, 3.2mm) | 16.6 | 36.7 | 70.5 |
| Haze (ASTM9125) | 100 | 100 | 94.7 |
| FPI (0°C, N, ISO 6603/2) | 7656 | 7778 | |
| INI (23°C, Kj/m², ISO 180) | 70.7 | 67 | 7.8 |
| Tensile Modulus (Mpa, ISO527) | 2189 | 2172 | 2477 |
| Vicat B (ISO 306/B) | 100.3 | 100.5 | 94.7 |

The use of various rubber types in the optimal PC/SAN blends of example 1 results in differences of transmission Impact modifier IM3 gives no reduction of transmission compared to the PC/SAN blend of example 1 but a small increase in haze.

### Example 3 (Comparative)

Prior to compounding the following pigments were added to the mixtures PC/SAN3/IM2 and PC/SAN3/TNI3 described in Ex3: 0.03 parts macrolex violet 3R (obtained from Bayer), 0.16 parts solvet blue 97 (RMC126, macrolex blue RR, obtained from Bayer), 0.5 parts aluminum flake RMC 916 (obtained from Geotech) and 0.2 parts glass flake (obtained from Engelhart). The mixtures were compounded and injection molded using standard conditions and evaluated on appearance in comparison to a pure PC with the same pigment mixture. The PC/SAN3/IM2 sample was evaluated as having a lighter color (due to the opaqueness of the matrix) and showing less 'depth' effect than the Pure PC sample. The PC/SAN3/TM3 sample however, showed the same color and depth of effect' as was observed with the pure PC sample.
Comparison of complete color formulations containing special effect pigments prepared from the two best PC/SAN/IM blends (with IM2 and IM3) with a similar formulation in pure PC shows that a PC/SAN/IM blend with transmission of 70% or higher results in the same depth of effect as is obtained from pure PC.

### Example 4 (Comparative)

### ExA

A mixture of 75 parts of PC-SP dodecane-PC copolymer, 25 parts of SAN (SAN (suspension SAN, 15% AN, prepared in VSS), 0.25 parts PETS (obtained from Henkel), 0.1 parts antioxidant 1076 (obtained from CIBA) and 0.1 part tris (di-tertbutylphenyl-phosphite (obtained from Ciba Geigy) was extruded through a twin screw extruder. The resulting pellets were molded into plastic parts with a thickness of 3.2 mm. Analysis of the parts is described in Table 3.

### Ex B

For comparison, a mixture of PC and SAN (AN =15%) content was prepared using the following formulation: 75 parts of PC (1x105), 0.25 parts PETS (obtained from Henkel), 0.1 parts antioxidant 1076 (obtained from CIBA) and 0.1 part tris (di-tert butylphenyl-phosphite (obtained from Ciba Geigy and 25 parts of the various SAN (obtained from GEP-VSS). The sample were compounded on a twin screw extruder and injection-molded into plaques with a thickness of 3.2 mm at standard conditions. into plastic parts with a thickness of 3.2 mm. Analysis of the parts is described in Table 3.

### Ex B

For comparison, a mixture of PC and SAN (AN =15%) content was prepared using the following formulation: 75 parts of PC (1x105), 0.25 parts PETS (obtained from Henkel), 0.1 parts antioxidant 1076 (obtained from CIBA) and 0.1 part tris (di-tert butylphenyl-phosphite (obtained from Ciba Geigy and 25 parts of the various SAN (obtained from GEP-VSS). The sample were compounded on a twin screw extruder and injection-molded into plaques with a thickness of 3.2 mm at standard conditions.
The results of the analysis of the molded samples of ExA and ExB are presented in Table 3.

**Table 3**

| | ExA | ExB |
|---|---|---|
| Transmission (%, 3.2mm) | 81 | 69.7 |
| Haze (ASTM - 9125) | 37 | 70.5 |

### Example 5

The polyester PCCD (with low RI [RI of PCCD ~ 1.516) that is fully miscible with PC can be used to lower the RI of the PC phase (phase 1) to the RI of a clear ABS (that has RI of SAN and Rubber phases already matched). This results in transparent PC/SAN/rubber blend. Mixtures of PC/PCCD resulted in linear RI going from 1.525 to 1.577 when using 100% PCCD to 100% PC respectively. The Clear ABS that was utilized in this example had a RI of 1.548. In order to match this a PC/PCCD ratio of 54 to 31 was prepared cyclohexanedicarboxylate) + 1.586 with a regression R squared coefficient of 0.998. Thus the refractive index of the mixture of the two components may be controlled between the upper and lower limits of their respective indices of refraction.

### Example 6 (Comparative)

This example is a calculated example using a mixture of polycarbonate having a refractive index of 1.586 and resorcinol diphosphate (RDP) having a refractive index of 1.5673. A mixture having 25 weight percent RDP in PC would result in a calculate refractive index of 0.25(1.5673) + 0.75(1.586) = 1.581.

Thus examples 5 and 6 show that the addition of PCCD or RDP lowers the RI of PC comprising either of these two additional components.
Conclusion of this example is that PCCD can be used to lower the RI of the PC phase to match the RI of the SAN/rubber phase resulting in a transparent impact modified PC alloy.

## Claims

1. A transparent or translucent thermoplastic alloy comprising a continuous phase and a discontinuous phase wherein the discontinuous phase is immiscible with the continuous phase, and wherein the continuous phase comprises polycarbonate and poly(1,4-cyclohexane dimethanol-1,4-cyclohexane dicarboxylate) (PCCD).

2. The thermoplastic alloy of claim 1, wherein the discontinuous phase comprises acrylonitrile butadiene styrene rubber.

3. A method for producing a transparent or translucent thermoplastic alloy comprising a continuous phase comprising a first thermoplastic composition comprising a polycarbonate and poly(1,4-cyclohexane dimethanol-1,4-cyclohexane dicarboxylate) and a discontinuous phase comprising a second thermoplastic composition, wherein the discontinuous phase is immiscible with the continuous phase, said method comprising:
a) selecting the first thermoplastic composition and the second thermoplastic composition wherein the refractive indices of the first thermoplastic composition and the second thermoplastic composition are approximately equal to each other; and
b) combining the first thermoplastic composition and the second thermoplastic composition
to produce thereby a transparent or translucent thermoplastic alloy comprising a continuous phase and a discontinuous phase.

4. The method of claim 3, wherein the refractive indices of the first thermoplastic composition and the second thermoplastic composition are different by less than 0.01.

5. A method for producing a transparent or translucent thermoplastic alloy comprising a continuous phase comprising a first thermoplastic composition and a discontinuous phase comprising a second thermoplastic composition, wherein the discontinuous phase is immiscible with the continuous phase, said method comprising:
a) a step selected from the group of steps consisting of:
i) adjusting the refractive index of the first thermoplastic composition;
ii) adjusting the refractive index of the second thermoplastic composition; and
iii) separately adjusting the refractive index of both the first and second thermoplastic compositions
whereby the refractive indices of the resulting first thermoplastic composition and the resulting second thermoplastic composition are approximately equal to each other; and
b) combining the first thermoplastic composition and the second thermoplastic composition
to produce thereby a transparent or translucent thermoplastic alloy comprising a continuous phase and a discontinuous phase,
wherein the first thermoplastic resin comprises a polycarbonate and the refractive index is adjusted by the addition of poly(1,4-cyclohexane dimethanol-1,4-cyclohexane dicarboxylate); and
wherein the second thermoplastic resin comprises acrylonitrile-butadiene-styrene rubber and the refractive index is adjusted by adjusting the styrene content or by the addition of methyl methyl methacrylate as a co-monomer.

## Patentansprüche

1. Eine transparente oder transluzente thermoplastische Legierung, umfassend eine kontinuierliche Phase und eine diskontinuierliche Phase, wobei die diskontinuierliche Phase nicht mit der kontinuierlichen Phase mischbar ist, und wobei die kontinuierliche Phase Polycarbonat und Poly(1,4-cyclohexandimethanol-1,4-cyclohexandicarboxylat) (PCCD) aufweist.

2. Thermoplastische Legierung nach Anspruch 1, wobei die diskontinuierliche Phase Acrylnitrilbutadienstyrolkautschuk aufweist.

3. Verfahren zur Herstellung einer transparenten oder transluzenten thermoplastischen Legierung, umfassend eine kontinuierliche Phase, die eine erste thermoplastische Zusammensetzung aufweist, die ein Polycarbonat und Poly(1,4-cyclohexandimethanol-1,4-cyclohexandicarboxylat) umfasst, und eine diskontinuierliche Phase, die eine zweite thermoplastische Zusammensetzung umfasst, wobei die diskontinuierliche Phase nicht mit der kontinuierlichen Phase mischbar ist, bei welchem Verfahren man:
a) die erste thermoplastische Zusammensetzung und die zweite thermoplastische Zusammensetzung auswählt, wobei die Brechungsindizes der ersten thermoplastischen Zusammensetzung und der zweiten thermoplastischen Zusammensetzung einander annähernd gleich sind; und
b) die erste thermoplastische Zusammensetzung und die zweite thermoplastische Zusammensetzung kombiniert,
um **dadurch** eine transparente oder transluzente thermoplastische Legierung herzustellen, welche eine kontinuierliche Phase und eine diskontinuierliche Phase umfasst.

4. Verfahren nach Anspruch 3, wobei die Brechungsindizes der ersten thermoplastischen Zusammensetzung und der zweiten thermoplastischen Zusammensetzung sich um weniger als 0,01 unterscheiden.

5. Verfahren zur Herstellung einer transparenten und transluzenten thermoplastischen Legierung, umfassend eine kontinuierliche Phase, aufweisend eine erste thermoplastische Zusammensetzung, und eine diskontinuierliche Phase, umfassend eine zweite thermoplastische Zusammensetzung, wobei die diskontinuierliche Phase nicht mit der kontinuierlichen Phase mischbar ist, wobei das Verfahren aufweist:
a) einen Schritt ausgewählt aus der Gruppe von Schritten bestehend aus:
i) Einstellen des Brechungsindex der ersten thermoplastischen Zusammensetzung;
ii) Einstellen des Brechungsindex der zweiten thermoplastischen Zusammensetzung; und
iii) getrennt Einstellen der Brechungsindizes sowohl der ersten als auch der zweiten thermoplastischen Zusammensetzung,
wobei die Brechungsindizes der resultierenden ersten thermoplastischen Zusammensetzung und der resultierenden zweiten thermoplastischen Zusammensetzung einander ungefähr gleich sind; und
b) dass man die erste thermoplastische Zusammensetzung und die zweite thermoplastische Zusammensetzung kombiniert,
um **dadurch** eine transparente oder transluzente thermoplastische Legierung herzustellen, die eine kontinuierliche Phase und eine diskontinuierliche Phase aufweist,
wobei die erste thermoplastische Zusammensetzung ein Polycarbonat umfasst und der Brechungsindex durch Zugabe von Poly(1,4-cyclohexandimethanol-1,4-cyclohexandiearboxylat) eingestellt wird; und
wobei die zweite thermoplastische Zusammensetzung Acrylnitrilbutadienstyrolkautschuk aufweist und der Brechungsindex **dadurch** eingestellt wird, dass man den Styrolgehalt einstellt oder durch Zugabe von Methylmethylmethacrylat als Comonomer.

## Revendications

1. Alliage thermoplastique translucide ou transparent, comprenant une phase continue et une phase discontinue, laquelle phase discontinue n'est pas miscible avec la phase continue, laquelle phase continue comprend un polycarbonate et du poly(1,4-cyclohexane-dicarboxylate de 1,4-cyclohexane-diméthanol) ou PCCD.

2. Alliage thermoplastique conforme à la revendication 1, dans lequel la phase discontinue comprend un caoutchouc d'acrylonitrile/butadiène/styrène.

3. Procédé de production d'un alliage thermoplastique translucide ou transparent, comprenant une phase continue, qui comprend une première composition thermoplastique comprenant un polycarbonate et du poly(1,4-cyclohexane-dicarboxylate de 1,4-cyclohexane-diméthanol), et une phase discontinue qui comprend une deuxième composition thermoplastique et qui n'est pas miscible avec la phase continue, lequel procédé comporte :
a) le fait de choisir la première composition thermoplastique et la deuxième composition thermoplastique de telle sorte que les indices de réfraction de ces première et deuxième compositions thermoplastiques soient à peu près égaux l'un à l'autre,
b) et le fait de combiner cette première composition thermoplastique et cette deuxième composition thermoplastique,
pour produire ainsi un alliage thermoplastique translucide ou transparent, comprenant une phase continue et une phase discontinue.

4. Procédé conforme à la revendication 3, dans lequel les indices de réfraction de la première composition thermoplastique et de la deuxième composition thermoplastique diffèrent de moins de 0,01.

5. Procédé de production d'un alliage thermoplastique translucide ou transparent, comprenant une phase continue qui comprend une première composition thermoplastique, et une phase discontinue qui comprend une deuxième composition thermoplastique et qui n'est pas miscible avec la phase continue, lequel procédé comporte :
a) une étape choisie dans l'ensemble des étapes suivantes :
i) ajuster l'indice de réfraction de la première composition thermoplastique,
ii) ajuster l'indice de réfraction de la deuxième composition thermoplastique,
iii) ajuster séparément les indices de réfraction des deux compositions thermoplastiques, la première et la deuxième,
de sorte que les indices de réfraction de la première composition thermoplastique résultante et de la deuxième composition thermoplastique résultante soient à peu près égaux l'un à l'autre,
b) et le fait de combiner cette première composition thermoplastique et cette deuxième composition thermoplastique,
pour produire ainsi un alliage thermoplastique translucide ou transparent, comprenant une phase continue et une phase discontinue,
et dans lequel procédé
- la première composition thermoplastique comprend un polycarbonate et l'on en ajuste l'indice de réfraction en y ajoutant du poly(1,4-cyclohexanedicarboxylate de 1,4-cyclohexane-diméthanol),
- et la deuxième composition thermoplastique comprend un caoutchouc d'acrylonitrile/butadiène/styrène et l'on en ajuste l'indice de réfraction en en ajustant la teneur en styrène ou en y ajoutant du méthacrylate de méthyle en tant que co-monomère.
